# FASCICULE DE BREVET EUROPEEN

(11) **EP 3 273 575 B1**
(45) Date de publication et mention de la délivrance du brevet: **29.04.2020**
(21) Numéro de dépôt: 17180708.4
(22) Date de dépôt: 11.07.2017
(51) Int. Cl.: H02K 5/06, H02K 5/04, H02K 5/15, H02K 1/18

(54) **CARCASSE DE STATOR DE MOTEUR VISSÉE ET PROCÉDÉ CORRESPONDANT**
VERSCHRAUBTES MOTORSTATORGEHÄUSE UND ENTSPRECHENDES VERFAHREN
SCREWED STATOR FRAME FOR AN ELECTRIC MOTOR AND ASSOCIATED MANUFACTURING PROCESS

(30) Priorité: 22.07.2016 FR 1657056
(43) Date de publication de la demande: 24.01.2018
(73) Titulaire: ALSTOM Transport Technologies, 93400 Saint-Ouen (FR)
(72) Inventeur: RAGUIN, Bruno, 25290 ORNANS (FR); LOMBARD, Jean-Pierre, 25480 MISEREY-SALINES (FR); TRIMAILLE, Gaëtan, 25440 CHENECEY-BUILLON (FR)
(74) Mandataire: Lavoix

(56) Documents cités:
- CN-A- 102 052 378
- DE-A1- 10 129 172
- JP-A- 10 225 042
- US-A- 598 540
- US-A1- 2013 193 784
- US-A1- 2014 035 407

## Description

La présente invention concerne une carcasse selon le préambule de la revendication 1.

Cette carcasse de stator est destinée à recevoir un rotor de moteur électrique, notamment un moteur électrique participant à la propulsion d'un véhicule ferroviaire.

Un véhicule ferroviaire comporte généralement plusieurs moteurs de ce type, positionnés sur les bogies et entrainant les roues. Pour ce faire, les moteurs électriques transforment en mouvement rotatif une puissance électrique produite par la génératrice du véhicule ou directement fournie depuis un câble d'alimentation.

Ces moteurs sont généralement composés d'une partie rotative, le rotor, et d'une partie fixe, le stator, fixée dans une carcasse, qui joue un rôle de protection et d'isolation et reçoit un circuit de refroidissement du moteur.

La carcasse est une enveloppe métallique, généralement en alliage de fer pour une résistance maximale, par exemple en fonte ou en acier. Plusieurs méthodes de fabrication d'une telle carcasse de moteur sont connues.

Une première méthode consiste à mouler la carcasse en une seule pièce, généralement en fonte, ce qui présente des avantages notamment en termes de coût. De plus, une carcasse en une seule pièce est plus rigide et solide. Cependant, la structure ainsi obtenue est lourde et encombrante

Pour réduire la masse de la carcasse, il est connu d'utiliser une structure en plusieurs pièces soudées entre elles, comprenant notamment deux plateaux d'extrémité reliés par des barreaux parallèles. Pour compenser la résistance plus faible d'une telle structure, on utilise généralement de l'acier pour sa réalisation, ce qui augmente sensiblement le coût de fabrication de la carcasse. De plus, une carcasse composée de plusieurs pièces soudées est plus susceptible de subir des distorsions sous l'effet de contraintes internes créées par le refroidissement des zones de soudure. Ces distorsions peuvent se répercuter sur le stator, ce qui peut nuire au bon fonctionnement du moteur électrique en formant des points chaud ou un balourd magnétique.

Des exemples de carcasses de stator de moteur sont décrits dans les documents US 2013/193784 A1, DE 101 29 172 A1, US 598 540 A, US 2014/035407 A1 CN102052378A et JP 10 225042 A.

Un but de l'invention est de fournir une carcasse de stator de moteur plus résistante aux distorsions et moins couteuse, tout en conservant un encombrement réduit.

A cet effet, l'invention concerne une carcasse selon la revendication 1.

Une telle carcasse présente des avantages en terme d'encombrement par rapport à la carcasse moulée en fonte, n'étant pas réalisée en une seule pièce et présentant ainsi une structure moins massive. La carcasse est également moins couteuse qu'une carcasse réalisée à partir de pièces en acier soudées entre elle, puisque les parties les plus massives comme les plateaux, sont réalisées en fonte.

Selon des modes de réalisation particuliers, la carcasse de stator de moteur selon l'invention présente une ou plusieurs des caractéristiques des revendications 2 à 6, prises isolément ou selon toute combinaison techniquement possible.

L'invention concerne également un procédé de fabrication selon la revendication 7.

Selon des modes de réalisation particuliers, le procédé selon l'invention présente une ou plusieurs des caractéristiques des revendications 8 à 10, prises isolément ou selon toute combinaison techniquement possible.

L'invention sera mieux comprise à la lecture de la description qui va suivre, donnée uniquement à titre d'exemple et faite en référence aux dessins annexés, parmi lesquels :
- la figure 1 est une vue en perspective d'une carcasse de stator de moteur selon l'invention ;
- la figure 2 est une vue en coupe d'une partie d'un plateau de la carcasse de la figure 1 recevant une douille filetée ;
- la figure 3 est une vue en coupe de la douille filetée de la figure 2 recevant un barreau en acier ; et
- la figure 4 est une vue en coupe de la douille filetée de la figure 2 dont la tête a été arasée.

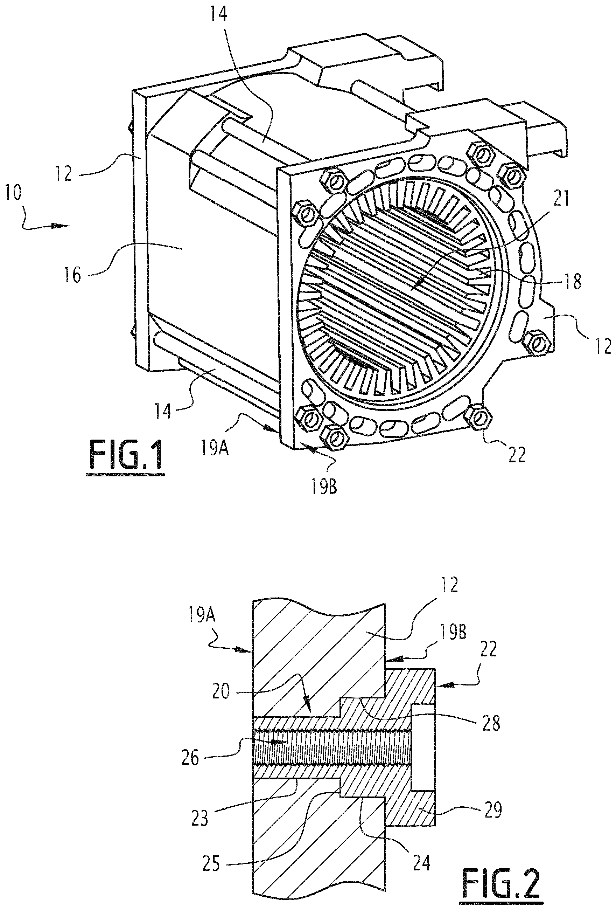

Une carcasse 10 de stator de moteur, représentée sur la figure 1, comporte deux plateaux 12 sensiblement parallèles et au moins un barreau 14 reliant les deux plateaux 12. Avantageusement, la carcasse 10 comprend des parois latérales 16 assemblées par bridage entre les deux plateaux 12 et aptes à contenir et protéger un stator 18 de moteur électrique.

Les plateaux 12 sont moulés en fonte et sont sensiblement plans et présentent une face intérieure 19A et une face extérieure 19B. Les deux plateaux 12 comportent de plus au moins un orifice 20, traversant. Par traversant, on entend que chaque orifice 20 est ouvert à ses deux extrémités et débouche sur la face intérieure 19A et sur la face extérieure 19B du plateau 12. Chaque plateau 12 comporte en outre une ouverture centrale 21 généralement circulaire, permettant le passage du rotor dans la carcasse 10.

Chaque orifice 20 est percé dans le plateau 12 et présente une section circulaire. De plus, chaque orifice 20 reçoit une douille filetée 22. En outre, chaque orifice 20 se compose d'un tronçon intérieur 23 débouchant sur la face intérieure 19A du plateau 12 et d'un tronçon extérieur 24 débouchant sur la face extérieure 19B du plateau 12. Le diamètre du tronçon intérieur 23 est inférieur au diamètre du tronçon extérieur 24. Le tronçon intérieur 23 et le tronçon extérieur 24 sont coaxiaux et leur jonction s'effectue sur un rebord 25, sensiblement orthogonal à l'axe des deux tronçons.

La douille filetée 22 est une douille en acier sensiblement cylindrique, de section adaptée à son introduction dans l'orifice 20. La douille 22 présente un conduit central 26 fileté débouchant à une première extrémité, ainsi qu'un épaulement 28 et une tête de serrage 29 à une deuxième extrémité. La longueur du conduit central 26 fileté est au moins égale à l'épaisseur du plateau 12, c'est-à-dire au moins égale à la distance entre les faces intérieure 19A et extérieure 19B au niveau de l'orifice 20.

La douille 22 est engagée dans l'orifice 20 du côté de la face extérieure 19B, de manière à placer l'épaulement 28 de la douille 22 en appui sur le rebord 25 de jonction entre le tronçon intérieur 23 et le tronçon extérieur 24 de l'orifice 20, comme représenté sur la figure 2.

Chaque barreau 14 est de type tirant, de section circulaire et est fait en acier. De plus, le barreau 14 présente deux extrémités 30 filetées, chaque extrémité 30 étant engagée dans le conduit central fileté 26 d'une douille 22.

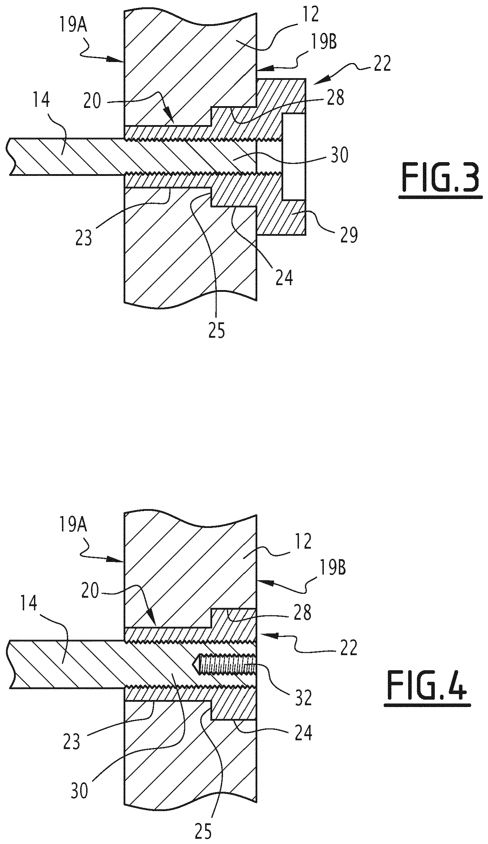

Avantageusement, la longueur du filetage de l'extrémité 30 engagé dans la douille filetée 22 est au moins égale à la longueur du conduit central 26 de façon à faire affleurer l'extrémité 30 du barreau 14 à la face extérieure 19B du plateau 12, comme représenté figure 3.

Chaque extrémité 30 de chaque barreau 14 est ainsi vissée dans le conduit central fileté 26 d'une des douilles filetées 22, ladite douille étant bloquée dans l'orifice 20 par l'interaction de l'épaulement 28 de la douille 22 avec le tronçon extérieur 24.

La tête de serrage 29 de chaque douille filetée 22 est arasée pour faire affleurer la douille filetée 22 et l'extrémité 30 du barreau 14 à la face extérieure 19B du plateau 12, comme représenté figure 4.

Avantageusement, chaque extrémité 30 d'au moins un des barreaux 14 présente une ouverture filetée 32 percée dans le barreau 14, comme représenté sur la figure 4. Cette ouverture filetée 32 est apte à recevoir une vis de fixation d'un flasque d'extrémité fermant l'ouverture circulaire du plateau 12 et protégeant ainsi le rotor contenu dans la carcasse 10.

La carcasse 10 de l'exemple représenté sur la figure 1 comprend ainsi deux plateaux 12 comportant chacun huit orifices 20 répartis par paires situées au niveau des coins du plateau 12. La carcasse 10 comporte également huit barreaux 14 reliant les deux plateaux 12, les huit barreaux 14 étant sensiblement parallèles entre eux et répartis autour des parois latérales 16. Avantageusement, les parois latérales 16 présentent des conduits longitudinaux par lesquels passent les barreaux 14, comme représenté sur la figure 1.

Un procédé de fabrication de la carcasse 10 va maintenant être décrit.

Ce procédé comporte les étapes préliminaires suivantes :
- moulage de deux plateaux 12 en fonte, présentant chacun une face intérieure 19A et une face extérieure 19B ;
- perçage d'au moins un orifice 20 dans les plateaux 12 et perçage d'un tronçon extérieur 24 au niveau de chaque orifice 20, débouchant sur la face extérieure 19B du plateau 12 ;
- fourniture d'au moins un barreau 14 en acier présentant deux extrémités 30 filetées ;
- fourniture d'au moins une douille filetée 22 en acier apte à être placée dans l'orifice 20, présentant un conduit fileté 26 à une première extrémité, ainsi qu'un épaulement 28 et une tête de serrage 29 à l'autre extrémité ;

Les deux plateaux 12 sont ensuite positionnés des deux côtés des parois latérales 16. Chaque orifice 20 reçoit une douille filetée 22, introduite du côté de la face extérieure 19B du plateau 12, l'épaulement 28 de la douille 22 coopérant avec le tronçon extérieur 24 de l'orifice 20. Chaque extrémité 30 de chaque barreau 14 est engagée dans une douille filetée, et le serrage de chaque extrémité 30 dans le conduit fileté 26 de chaque douille 22 assure le bridage des deux plateaux 12 de chaque côté des parois latérales 16.

Selon un mode de réalisation avantageux, les faces extérieures 19B des plateaux 12 sont ensuite aplanies par arasage des têtes de serrage 29 des douilles filetées 22, en retirant le matériau excédentaire pour faire affleurer à la face extérieure 19B les douilles filetées 22 et les extrémités 30 des barreaux 14 en acier.

Le procédé comporte enfin une étape de perçage d'une ouverture filetée 32 dans chaque extrémité 28 de chaque barreau 14, l'ouverture filetée 32 recevant ultérieurement une vis de fixation d'un flasque d'extrémité.
- moulage de deux plateaux 12 en fonte, présentant chacun une face intérieure 19A et une face extérieure 19B ;
- perçage d'au moins un orifice 20 dans les plateaux 12 et perçage d'un tronçon extérieur 24 au niveau de chaque orifice 20, débouchant sur la face extérieure 19B du plateau 12 ;
- fourniture d'au moins un barreau 14 en acier présentant deux extrémités 30 filetées ;
- fourniture d'au moins une douille filetée 22 en acier apte à être placée dans l'orifice 20, présentant un conduit fileté 26 à une première extrémité, ainsi qu'un épaulement 28 et une tête de serrage 29 à l'autre extrémité ;

Les deux plateaux 12 sont ensuite positionnés des deux côtés des parois latérales 16. Chaque orifice 20 reçoit une douille filetée 22, introduite du côté de la face extérieure 19B du plateau 12, l'épaulement 28 de la douille 22 coopérant avec le tronçon extérieur 24 de l'orifice 20. Chaque extrémité 30 de chaque barreau 14 est engagée dans une douille filetée, et le serrage de chaque extrémité 30 dans le conduit fileté 26 de chaque douille 22 assure le bridage des deux plateaux 12 de chaque côté des parois latérales 16.

Selon un mode de réalisation avantageux, les faces extérieures 19B des plateaux 12 sont ensuite aplanies par arasage des têtes de serrage 29 des douilles filetées 22, en retirant le matériau excédentaire pour faire affleurer à la face extérieure 19B les douilles filetées 22 et les extrémités 30 des barreaux 14 en acier.

Le procédé comporte enfin une étape de perçage d'une ouverture filetée 32 dans chaque extrémité 28 de chaque barreau 14, l'ouverture filetée 32 recevant ultérieurement une vis de fixation d'un flasque d'extrémité.

## Revendications

1. Carcasse (10) de protection de stator de moteur comprenant :
- deux plateaux (12) d'extrémité en fonte ; et
- au moins un barreau (14) en acier reliant les deux plateaux (12), chaque barreau (14) présentant deux extrémités (30) filetées ;
- des parois latérales (16) aptes à contenir et protéger le stator ;
**caractérisée en ce que** la carcasse (10) comprend en outre au moins une douille filetée (22) et **en ce que** chacun des plateaux (12) comprend au moins un orifice (20) servant de siège à chaque douille filetée (22), les extrémités (30) filetées de chaque barreau (14) étant engagées dans les douilles filetées (22).

2. Carcasse (10) selon la revendication 1, dans laquelle chaque orifice (20) de chaque plateau (12) en fonte est traversant et débouche sur une face intérieure (19A) et une face extérieure (19B) du plateau (12).

3. Carcasse (10) selon la revendication 2, dans laquelle chaque orifice (20) comporte un tronçon intérieur (23) débouchant sur la face intérieure (19A) du plateau (12) et un tronçon extérieur (24) débouchant sur la face extérieure (19B) du plateau (12), le tronçon intérieur (23) présentant un diamètre inférieur au diamètre du tronçon extérieur (24), et la douille filetée (22) engagée dans l'orifice (20) présentant un épaulement (28) complémentaire de l'orifice (20).

4. Carcasse (10) selon l'une quelconque des revendications précédentes, dans laquelle chaque douille filetée (22) affleure une face extérieure (19B) du plateau (12) comportant l'orifice (20).

5. Carcasse (10) selon la revendication 4, dans laquelle chaque extrémité (30) de chaque barreau (14) affleure la face extérieure (19B).

6. Carcasse (10) selon l'une quelconque des revendications précédentes, dans laquelle chaque extrémité (30) de chaque barreau (14) présente un orifice fileté (32) recevant une vis de fixation d'un flasque d'extrémité.

7. Procédé de fabrication d'une carcasse (10) selon l'une quelconque des revendications précédentes, comprenant les étapes suivantes :
- fourniture de deux plateaux (12) d'extrémité en fonte, présentant au moins un orifice (20) ;
- fourniture d'au moins un barreau (14) en acier présentant deux extrémités (30) filetées ;
- fourniture de douilles filetées (22) ;
- fourniture de parois latérales (16) et assemblage des parois latérales (16) entre les plateaux (12) ;
- insertion d'une des douilles filetées (22) dans chaque orifice (20) de chaque plateau (14) ; et
- vissage de chaque extrémité (30) filetée de chaque barreau (14) dans l'une des douilles filetées (22) placée dans l'un des orifices (20) d'un des plateaux (12).

8. Procédé de fabrication selon la revendication 7, comprenant une étape de perçage de la face extérieure (19B) de chaque plateau pour former un tronçon extérieur (24) au niveau de chaque orifice (20), ledit conduit extérieur (24) étant apte à coopérer avec un épaulement (28) de chaque douille filetée (22) pour maintenir ladite douille filetée (22) en place.

9. Procédé de fabrication selon la revendication 8, comprenant une étape d'arasage d'une tête de serrage (29) de chaque douille filetée (22) pour faire affleurer la douille filetée (22) et l'extrémité (30) du barreau (14) à la face extérieure (19B) du plateau (12).

10. Procédé de fabrication selon la revendication 9, comprenant une étape de perçage d'un orifice (32) fileté de réception d'une vis de fixation d'un flasque d'extrémité dans chaque extrémité (30) d'au moins un barreau (14).

## Patentansprüche

1. Gehäuse (10) zum Schutz eines Motorstators, umfassend:
- zwei Endplatten (12) aus Gusseisen;
- mindestens eine Stange (14) aus Stahl, die die zwei Endplatten (12) verbindet, wobei jede Stange (14) zwei gewindegeschnittene Enden (30) aufweist; und
- Seitenwände (16), die ausgelegt sind, um den Stator zu enthalten und zu schützen;
**dadurch gekennzeichnet, dass** das Gehäuse (10) außerdem mindestens eine gewindegeschnittene Buchse (22) umfasst, und dadurch, dass jede der Platten (12) mindestens eine Öffnung (20) umfasst, die als Sitz für jede gewindegeschnittene Buchse (22) dient, wobei die gewindegeschnittenen Enden (30) jeder Stange (14) in gewindeschnittenen Buchsen (22) eingesetzt sind.

2. Gehäuse (10) nach Anspruch 1, wobei jede Öffnung (20) jeder Endplatte (12) aus Gusseisen querliegend ist und auf einer Innenseite (19A) und einer Außenseite (19B) der Platte (12) mündet.

3. Gehäuse (10) nach Anspruch 2, wobei jede Öffnung (20) einen inneren Abschnitt (23) umfasst, der auf der Innenseite (19A) der Platte (12) mündet, und einen äußeren Abschnitt (24), der auf der Außenseite (19B) der Platte (12) mündet, wobei der innere Abschnitt (23) einen Durchmesser aufweist, der geringer als der Durchmesser des äußeren Abschnitts (24) ist, und wobei die gewindegeschnittene Buchse (22), die in die Öffnung (20) eingesetzt ist, einen komplementären Absatz (28) zur Öffnung (20) aufweist.

4. Gehäuse (10) nach einem der vorhergehenden Ansprüche, wobei jede gewindegeschnittene Buchse (22) eine Außenseite (19B) der Platte (12), umfassend die Öffnung (20), überragt.

5. Gehäuse (10) nach Anspruch 4, wobei jedes Ende (30) jeder Stange (14) die Außenseite (19B) überragt.

6. Gehäuse (10) nach einem der vorhergehenden Ansprüche, wobei jedes Ende (30) jeder Stange (14) eine gewindegeschnittene Öffnung (32) aufweist, die eine Befestigungsschraube eines Endflansches aufnimmt.

7. Verfahren zur Herstellung eines Gehäuses (10) nach einem der vorhergehenden Ansprüche, das die folgenden Schritte umfasst:
- Liefern von zwei Endplatten (12) aus Gusseisen, die mindestens eine Öffnung (20) aufweisen,
- Liefern von mindestens einer Stange (14) aus Stahl, die zwei gewindegeschnittene Enden (30) aufweist;
- Liefern von gewindegeschnittenen Buchsen (22);
- Liefern von Seitenwänden (16) und Zusammenbauen der Seitenwände (16) zwischen den Platten (12);
- Einführen einer der gewindegeschnittenen Buchsen (22) in jede Öffnung (20) jeder Platte (14); und
- Schrauben jedes gewindegeschnittenen Endes (30) jeder Stange (14) in eine der gewindegeschnittenen Buchsen (22), die in einer der Öffnungen (20) einer der Platten (12) platziert ist.

8. Verfahren zur Herstellung nach Anspruch 7, umfassend einen Schritt des Bohrens der Außenseite (19B) jeder Platte, um einen äußeren Abschnitt (24) auf der Ebene jeder Öffnung (20) zu bilden, wobei die äußere Leitung (24) ausgelegt ist, um mit einem Absatz (28) jeder gewindegeschnittenen Buchse (22) zusammenzuarbeiten, um die gewindegeschnittene Buchse (22) in ihrer Position zu halten.

9. Verfahren zur Herstellung nach Anspruch 8, umfassend einen Schritt des Abschleifens eines Spannkopfes (29) jeder gewindegeschnittenen Buchse (22), um die gewindegeschnittene Buchse (22) und das Ende (30) der Stange (14) die Außenseite (19B) der Platte (12) überragen zu lassen.

10. Verfahren zur Herstellung nach Anspruch 9, umfassend einen Schritt des Bohrens einer gewindegeschnittenen Öffnung (32) zur Aufnahme einer Befestigungsschraube eines Endflansches in jedem Ende (30) mindestens einer Stange (14).

## Claims

1. Motor stator frame (10) comprising:
- two end plates (12) in cast iron;
- at least one steel bar (14) connecting both plates (12), each bar (14) having two threaded ends (30); and
- side walls (16) able to contain and protect the stator,
**characterized in that** the frame (10) further comprises at least one threaded bushing (22) and **in that** each of the plates (12) comprises at least one orifice (20) being used as a seat for each threaded bushing (22), the threaded ends (30) of each bar (14) being engaged into the threaded bushings (22).

2. Frame (10) according to claim 1, wherein each orifice (20) of each plate (12) in cast iron is a through-orifice and opens onto an inner face (19A) and an outer face (19B) of the plate (12).

3. Frame (10) according to claim 2, wherein each orifice (20) comprises an inner segment (23) opening onto the inner face (19A) of the plate (12) and an outer segment (24) opening onto the outer face (19B) of the plate (12), the inner segment (23) having a diameter of less than the diameter of the outer segment (24), and the threaded bushing (22) engaged into the orifice (20) having a complementary shoulder (28) of the orifice (20).

4. Frame (10) according to any of the preceding claims, wherein each threaded bushing (22) is flush with an outer face (19B) of the plate (12) including the orifice (20).

5. Frame (10) according to claim 4, wherein each end (30) of each bar (14) is flush with the outer face (19B).

6. Frame (10) according to any of the preceding claims, wherein each end (30) of each bar (14) has a threaded orifice (32) receiving a screw for attaching an end flange.

7. Method for manufacturing a frame (10) according to any of the preceding claims, comprising the following steps:
- providing two end plates (12) in cast iron, having at least one orifice (20);
- providing at least one steel bar (14) having two threaded ends (30);
- providing threaded bushings (22);
- providing side walls (16) and assembling the side walls (16) between the plates (12);
- inserting one of the threaded bushings (22) in each orifice (20) of each plate (14); and
- screwing each threaded end (30) of each bar (14) into one of the threaded bushings (22) placed in one of the orifices (20) of one of the plates (12).

8. Manufacturing method according to claim 7, comprising a step for piercing the outer face (19B) of each plate in order to form an outer segment (24) at each orifice (20), said outer conduit (24) being able to cooperate with a shoulder (28) of each threaded bushing (22) for maintaining said threaded bushing (22) in place.

9. Manufacturing method according to claim 8, comprising a step for leveling a tightening head (29) of each threaded bushing (22) in order to make the threaded bushing (22) and the end (30) of the bar (14) flush with the outer face (19B) of the plate (12).

10. Manufacturing method according to claim 9, comprising a step for piercing a threaded orifice (32) for receiving a screw for attaching an end flange in each end (30) of at least one bar (14).
